# EUROPÄISCHE PATENTANMELDUNG

(11) **EP 2 143 670 A2**
(43) Veröffentlichungstag der Anmeldung: **13.01.2010**
(21) Anmeldenummer: 09164753.7
(22) Anmeldetag: 07.07.2009
(51) Int. Cl.: B65G 21/06

(54) **Modularer Bandförderer**

(30) Priorität: 08.07.2008 DE 202008009151 U
(71) Anmelder: Ligmatech Automationssysteme GmbH, 09638 Lichtenberg (DE)
(72) Erfinder: Krieger, Mathias, 04159 Leipzig (DE); Tönnings, Sven, 09638 Lichtenberg (DE)
(74) Vertreter: HOFFMANN EITLE

(57) **Zusammenfassung**

Bandförderer mit mindestens einer Bandkörperwange (1), dadurch gekennzeichnet, dass die mindestens eine Bandkörperwange ein regelmäßiges Raster an Befestigungspositionen (2) zur Befestigung funktionaler Einheiten des Bandförderers aufweist.

## Beschreibung

### TECHNISCHES GEBIET

Die Erfindung betrifft einen Bandförderer mit mindestens einer Bandkörperwange.

### STAND DER TECHNIK

Bandförderer für den Einsatz als Transportband, Packband und Montageband sind beispielsweise aus der DE 20 2006 007 320 U1 bekannt. Darin umfasst ein Bandförderer, der insbesondere für den Werkstücktransport an Werkzeugmaschinen vorgesehen ist, ein endloses Transportband und eine Tragstruktur, wobei die Tragstruktur zwei starre Segmente umfasst, die jeweils mindestens eine Umlenkrolle für das Transportband umfassen.

Eine Vorrichtung zum Fördern von Stückgut auf einem Umlaufgurt ist in der DE 20 3005 009 206 U1 offenbart. Dieser Gurtförderer weist einen endlosen, über endseitige Umlenkrollen geführten angetriebenen Umlaufgurt auf.

Die Bandförderer aus dem Stand der Technik sind für ein bestimmtes Einsatzgebiet ausgelegt. Ist ein solches Bandsystem erst einmal aufgebaut, kann es nur schwer für andere Einsatzzwecke umkonfiguriert werden. Weiterhin ist die Konfiguration und Dimensionierung der bekannten Bandförderer für unterschiedliche Einsatzzwecke aufwändig und erfordert häufig eine dem jeweiligen Einsatz angepasste Neukonstruktion.

### BESCHREIBUNG DER ERFINDUNG

Es ist daher eine Aufgabe der Erfindung, einen Bandförderer bereit zu stellen, der flexibel konfigurierbar ist.

Die Aufgabe wird durch den Gegenstand des Anspruchs 1 gelöst. Vorteilhafte Ausgestaltungen folgen aus den Unteransprüchen.

Der Bandförderer gemäß Anspruch 1 weist mindestens eine Bandkörperwange auf. Erfindungsgemäß weist zumindest eine Bandkörperwange ein regelmäßiges bzw. periodisches Raster an Befestigungspositionen zur Befestigung funktionaler Einheiten des Bandförderers auf.

Unter dem Begriff "funktionale Einheit" wird in der vorliegenden Offenbarung ein Modul verstanden, das bestimmte Funktionen des Bandförderers übernimmt, wie beispielsweise den Antrieb des Förderbandes, das Spannen und/oder Umlenken des Förderbandes, das Unterstützen des Förderbandes und/oder die Steuerung des Förderbandes. Weitere Funktionen können durch funktionale Einheiten im Bereich von Zusatzmodulen bereit gestellt werden, beispielsweise die Funktionen des Ausrichtens der transportierten Werk- oder Packstücke auf dem Förderband oder der Bearbeitung von auf dem Förderband befindlichen Werkstücken.

Vorzugsweise sind die Bandkörperwangen profiliert, um eine erhöhte Stabilität zu erreichen. Durch die Profilierung kann darüber hinaus auch beispielsweise eine verdrehsichere Befestigung funktionaler Einheiten an den Befestigungspositionen der Bandkörperwangen erreicht werden.

An den Befestigungspositionen können einsatzabhängig funktionale Einheiten wie beispielsweise Antriebsmodule, Umlenkmodule, Spannmodule und/oder Zusatzmodule, wie etwa Sensormodule oder Module zur Bandreinigung angebracht werden.

Durch die Regelmäßigkeit des Rasters der Befestigungspositionen wird sichergestellt, dass der Bandförderer vielseitig und flexibel verwendbar ist, da die einzelnen funktionalen Einheiten im Rasterabstand frei an den Bandkörperwangen angebracht werden können und dadurch ein flexibel konfigurierbarer Aufbau realisiert werden kann.

Damit können kurze Reaktionszeiten zur Realisierung kundenspezifischer Anforderungen und verkürzter Montagezeiten durch vorkonfektionierte funktionale Einheiten bzw. Module erzielt werden. Ferner kann der Aufwand für notwendige Konstruktionsarbeiten und besondere Einzelgestaltungen durch die Verwendung von Einzelteilen und Baugruppen in standardisierten funktionalen Einheiten bzw. Modulen minimiert werden. Darüber hinaus können einzelne Module im Havariefall als Ganzes ausgetauscht werden, so dass mögliche Ausfallzeiten verkürzt werden können.

Der Bandförderer der vorliegenden Erfindung kann als eigenständige Einheit aufgebaut und verwendet werden. Alternativ kann der Bandförderer mit anderen Transporteinrichtungen als eigenständig funktionsfähige Einheit oder als nur in Verbindung mit einer oder mehreren anderen Einheiten funktionsfähige Einheit aufgebaut und verwendet werden.

Vorzugsweise ist der Bandförderer modular aufgebaut. Für eine Modularisierung ist wesentlich, dass zumindest einzelne funktionale Einheiten bzw. Module in unterschiedlicher Konfiguration zu einem entsprechend funktionsfähigen Bandförderer kombiniert werden können und gleichzeitig im Havariefall, bei einer Neukonfiguration oder bei einer Aufrüstung des Bandförderers einfach gegen andere funktionale Einheiten oder Module ersetzbar oder austauschbar sind.

Mittels des regelmäßigen Rasters von Befestigungspositionen in den Bandkörperwangen können funktionale Einheiten bzw.

Module des Bandförderers an unterschiedlichen Positionen montiert werden und sind einfach austauschbar. Somit ist der modulare Bandförderer der vorliegenden Erfindung flexibel für unterschiedliche Einsatzgebiete konfigurierbar, obwohl er aus einem begrenzten Schatz an funktionalen Einheiten, Modulen oder Einzelteilen besteht.

Vorzugsweise sind die Befestigungspositionen in Form von Bohrungen oder Profilnuten vorgesehen, um das Anbringen, Ersetzen und Entfernen von funktionalen Einheiten bzw. Modulen des Bandförderers zu vereinfachen und zu standardisieren. Andere geeignete Arten des Bereitstellens von Befestigungspositionen können natürlich ebenfalls verwendet werden. Wesentlich für die Bereitstellung der Befestigungspositionen ist nur, dass an der jeweiligen Bandkörperwange ein vorgegebenes, regelmäßiges Raster dieser Befestigungspositionen vorgesehen ist. Weitere Befestigungspositionen können beispielsweise durch Aussparungen, hakenförmige Einheiten und/oder Vorsprünge und Federn, welche mit Nuten eines Gegenstücks zusammenwirken, vorgegeben sein.

Vorzugsweise wird eine fixe Förderlänge des Bandförderers durch die Befestigung mindestens zweier Umlenkrollenmodule an beiden Enden der mindestens einen Bandkörperwange gewährleistet. Mit anderen Worten haben die Umlenkrollen bezüglich der Bandkörperwangen eine festgelegte Drehachse. Zur Spannung ist dabei mindestens ein zwischen den beiden Umlenkrollenmodulen angeordnetes Bandspannmodul an mindestens einer Bandkörperwange vorgesehen. Durch diese Anordnung des Bandspannmoduls kann unabhängig von den Bandspannungsbedingungen, insbesondere bezüglich des Materials des Förderbandes und der geförderten Lasten, eine stets gleiche Förderlänge sicher gestellt werden, so dass der Bandförderer einfach in bestehende Anlagen integriert werden kann bzw. nicht, wie bei einer Kopfspannung üblich, verrückt werden muss. Dies ist insbesondere für Bandförderer von Vorteil, welche zwischen vor- und nachgelagerten Transporteinrichtungen, beispielsweise anderen Bandförderern, Riemenförderern und/oder Rollenbahnen, mit definierten Transportgutübergängen angeordnet sind.

Durch das regelmäßige Raster von Befestigungspositionen können die für eine bestimmte Anwendung vorgesehenen bzw. notwendigen Längen der Bandkörperwangen schnell und einfach von einem Stangenmaterial abgelängt werden und gleich verwendet werden, ohne dass ein weiterer Bearbeitungsschritt für das Einbringen von Befestigungspositionen vorgenommen werden müsste.

Vorzugsweise weist der Bandförderer genau zwei profilierte Bandkörperwangen auf, welche ein regelmäßiges Raster von Befestigungspositionen aufweisen. Die funktionalen Einheiten bzw. die Module des Bandförderers sind vorzugsweise an unterschiedlichen Positionen entlang der Bandkörperwangen bzw. des Bandkörpers angeordnet und werden von den zwei parallelen profilierten Bandkörperwangen jeweils an den Befestigungspositionen gehalten.

Um die Modularität des Bandförderers zu unterstützen, verlaufen die beiden Bandkörperwangen parallel zueinander und die beiden Raster von Befestigungspositionen sind spiegelsymmetrisch bezüglich einer Ebene vorgesehen, die parallel zu den beiden Bandkörperwangen zwischen ihnen verläuft und die senkrecht zu der durch die Bandkörperwangen aufgespannten Ebene verläuft.

Vorzugsweise weist der Bandförderer ferner funktionale Einheiten in Form von Traversen, Bandspannmodulen, Umlenkrollenmodulen, Antriebseinheiten mit Antriebsrollen und/oder Unterstützungsrollen auf. Diese Module erweitern und/oder komplettieren den Aufbau des Bandförderers und können an den Befestigungspositionen mit den Bandkörperwangen fest verbunden werden.

Vorzugsweise weist der Bandförderer eine modulare Bandauflage auf, die ebenfalls als Modul, beispielsweise zwischen zwei Bandkörperwangen, an den Befestigungspositionen anbringbar ist. Eine solche modulare Bandauflage ist einfach austauschbar und einfach für verschiedene vorgegebene Förderlängen konfigurierbar. Die Bandauflage kann dabei ebenfalls an den Befestigungspositionen der Bandkörperwangen befestigt werden.

Vorzugweise weist der Bandförderer eine Antriebseinrichtung mit einer Antriebsrolle auf, die als funktionale Einheit an dem Bandförderer beispielsweise kopfseitig anbringbar ist. Das Antriebsmodul kann beispielsweise einen Hohlwellengetriebemotor, einen Getriebemotor mit Vorgelege oder einen Trommelmotor umfassen.

Vorzugsweise weist der Bandförderer Umlenkrollen auf, deren Durchmesser gleich dem einer Antriebsrolle ist, wodurch die Modularität des Gesamtaufbaus unterstützt wird.

Aufgrund des modularen Aufbaus des erfindungsgemäßen Bandförderers kann der Bandförderer vorzugsweise auf Füßen montiert werden oder mittels der Befestigungspositionen mit anderen Transporteinrichtungen, wie beispielsweise Bandförderern, Rollenbahnen, Zahnriemenförderern, kombiniert und/oder mit diesen integriert werden.

Vorzugsweise sind die Befestigungspositionen so gestaltet, dass die wesentlichen Module oder funktionalen Einheiten zur Komplettierung eines funktionsfähigen Bandförderers daran modular angebaut werden können, um die Montagezeiten zu minimieren.

Vorzugsweise können Zusatzmodule, wie beispielsweise Sensorik, Lineale, Röllchenleisten, Verbreiterungen, Module zur Bandreinigung, Bandübergänge, Deckelführungen für offene Kartons und/oder Oberdrücke an den Bandförderer im Bereich der Befestigungspositionen angebaut werden.

Zur Erhöhung der Stabilität sind die jeweiligen Bandkörperwangen für den Bandförderer durchgehend ausgeführt.

Mehrere modulare Bandauflagen können vorzugsweise vorgesehen sein, die in paarweise gegenüberstehende Bandkörperwangen eingelegt sind.

### KURZE BESCHREIBUNG DER ZEICHNUNGEN

- Figur 1: ist eine perspektivische Ansicht eines Bandförderers gemäß einem Ausführungsbeispiel.
- Figur 2: ist ein perspektivischer Ausschnitt einer Bandkörperwange gemäß einem Ausführungsbeispiel.
- Figur 3A bis 3C: sind perspektivische Kopfansichten des Bandförderers mit Antriebseinheit gemäß einem Ausführungsbeispiel.
- Figur 4: zeigt Füße, die modular mit dem Bandförderer verbindbar sind.
- Figuren 5A bis 5C: sind seitliche Schnittansichten des Bandförderers bzw. Ausschnitte davon.

### DETAILLIERTE BESCHREIBUNG DER ZEICHNUNGEN

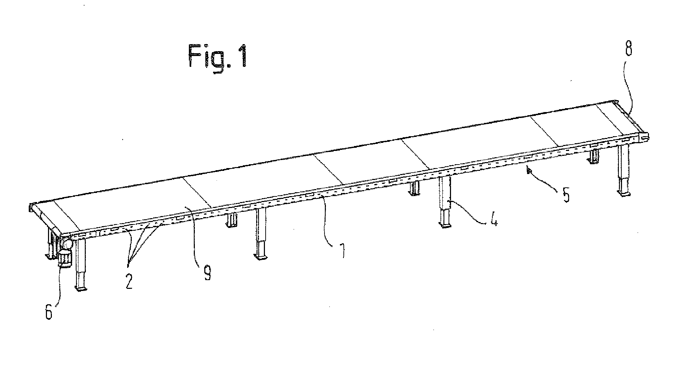

Figur 1 ist eine perspektivische Ansicht eines Bandförderers gemäß einem Ausführungsbeispiel. Der Bandförderer ist modular aufgebaut, so dass dieser durch Kombination verschiedener funktionaler Einheiten bzw. Module flexibel konfigurierbar ist.

Die Basis für alle Einsatzgebiete bildet der Bandkörper 5, welcher in der gezeigten Ausführungsform zwei parallele Bandkörperwangen 1, welche jeweils ein regelmäßiges Raster an Befestigungspositionen 2 aufweisen, und mindestens eine an mindestens einer Befestigungsposition 2 befestigte funktionale Einheit 6, 8, 9 umfasst.

Der Bandkörper 5 wird je nach Einsatzgebiet mit funktionalen Einheiten in Form einer oder mehrerer Bandauflagen 9 und einem Antriebsmodul 6 und einem Umlenkmodul 8 ausgerüstet, die jeweils an den Befestigungspositionen 2 befestigt sind. Auf ein eigenes Antriebsmodul kann jedoch in bestimmten Fällen verzichtet werden, wenn der Bandförderer in eine andere Transporteinrichtung integriert wird, die mit einem Antriebsmodul ausgestattet ist.

Durch das in den Bandkörperwangen 1 vorgesehene Raster an Befestigungspositionen 2 kann eine flexible Konfiguration des Bandkörpers 5 vorgenommen werden. Insbesondere können unterschiedliche Längen des Bandkörpers 5 auf einfache Weise hergestellt werden, da die Bandkörperwangen 1 einfach entsprechend abgelängt werden können und dann sofort mit der Montage der funktionale Einheiten 6, 8, 9 an den Befestigungspositionen 2 begonnen werden kann, ohne dass ein weiterer Bearbeitungsschritt des Einbringens von speziell eingebrachten Befestigungspositionen durchgeführt werden müsste.

Typischer Weise wird der Bandkörper 5 auf Füße 4 montiert. Er kann aber auch mittels nicht gezeigter Elemente mit anderen Transporteinrichtungen integriert werden.

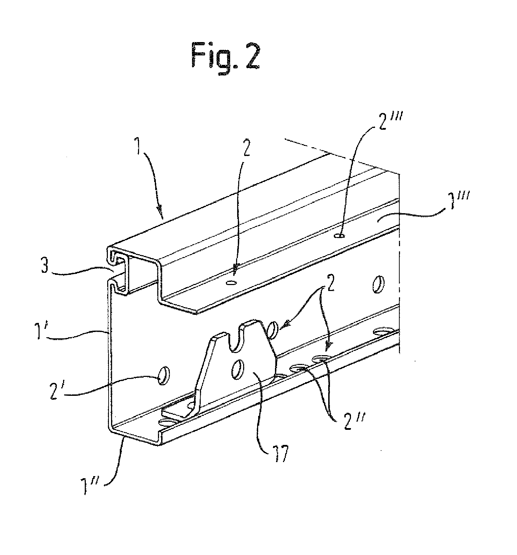

Figur 2 zeigt einen perspektivischen Ausschnitt aus einer Bandkörperwange 1. Die gezeigte Bandkörperwange 1 weist eine deutliche Profilierung auf, die zum Einen zur Erhöhung der Stabilität der Bandkörperwange dient, und zum Anderen eine im Wesentlichen verdrehsichere Befestigung funktionaler Einheiten ermöglicht.

In der Bandkörperwange 1 sind Befestigungspositionen 2 in Form von Bohrungen eingebracht. Es ist in der Figur 2 zu erkennen, dass unterschiedliche Raster von Befestigungspositionen 2 in die Bandkörperwange 1 eingebracht sind. Die in der Seitenwand 1' der Bandkörperwange 1 eingebrachten Befestigungspositionen 2' weisen dabei einen größeren Abstand auf, als die in der unteren Wand 1" eingebrachten Befestigungspositionen 2" oder die in der oberen Wand 1''' eingebrachten Befestigungspositionen 2'''. Die in der unteren Wand 1'' eingebrachten Befestigungspositionen 2'' weisen darüber hinaus auch ein durchbrochenes, regelmäßiges Raster an Befestigungspositionen 2'' auf.

In der Bandkörperwange 1 ist weiterhin auch eine Profilnut 3 eingebracht, die ihrerseits zur Befestigung modularer Einheiten dienen kann. Die Figur 2 zeigt ferner eine exemplarisch an den unteren Befestigungspositionen 2'' befestigte modulare Einheit in Form einer Befestigungsstruktur 17.

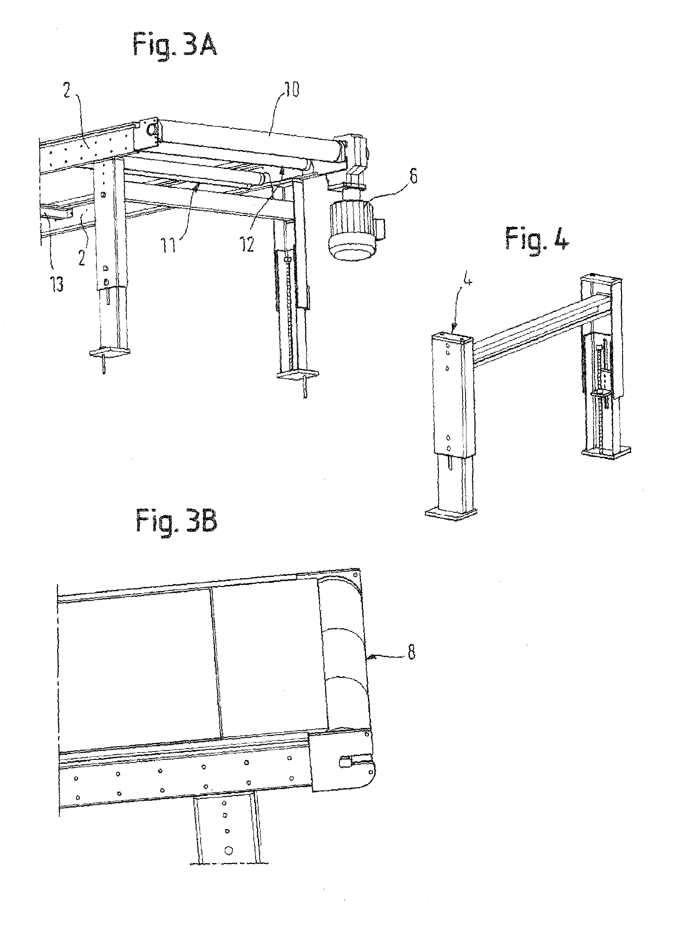

Figur 3A ist eine perspektivische Ansicht eines Endabschnitts des modularen Bandförderers gemäß der vorliegenden Offenbarung. Der Bandkörper 5 umfasst neben den in Figur 1 gezeigten Bandkörperwangen 1 auch funktionale Einheiten in Form von Traversen 13, einem Bandspannmodul 11, einem Bandlaufkorrekturmodul 12 und einer Bandumlenkrolle 10. Hier ist klar zu erkennen, dass die Bandumlenkrolle 10 an einem Ende der Bandkörperwangen 1 mit einer zu diesen festen Drehachse vorgesehen ist. Das Bandspannmodul 11 ist zwischen der gezeigten Bandumlenkrolle 10 und der auf der anderen Seite der Bandkörperwangen 1 angeordneten, nicht gezeigten Bandumlenkrolle angeordnet. Entsprechend kann eine fixe Förderlänge erreicht werden, da die Bandspannung nicht in Form einer Kopfspannung vorgenommen wird, bei der die Bandumlenkrollen gegenüber der Bandkörperwangen 1 verschoben werden, sondern die Bandspannung durch das zwischen den Bandumlenkrollen 10 angeordnete Bandspannmodul erreicht wird.

Diese funktionalen Einheiten sind jeweils an den jeweiligen Befestigungspositionen 2 einfach konfigurierbar befestigt. Die Bandumlenkrolle 10 ist mit einem Antriebsmodul 6, das in dieser Ausführungsform einen Hohlwellengetriebemotor oder einen Getriebemotor mit Vorgelege umfasst, versehen.

Figur 3B zeigt einen Endabschnitt des Bandförderers aus einer anderen Perspektive. Das Antriebsmodul ist hier als Trommelmotor 8 ausgebildet, der gleichzeitig als Bandumlenkrolle 10 dient.

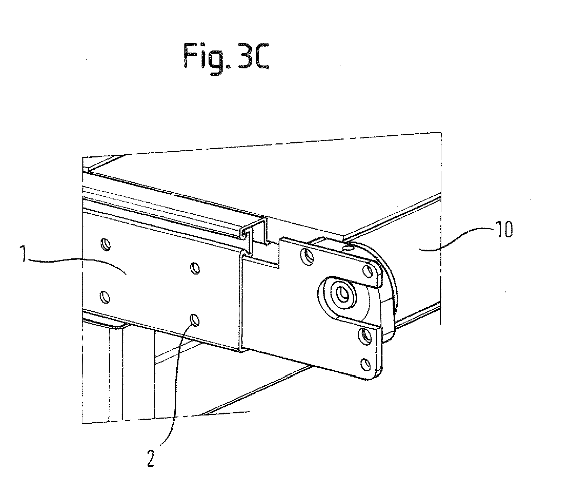

Ein vergrößerter Ausschnitt dieses Endabschnitts des Bandförderers ist in Figur 3C gezeigt. Hier ist wiederum klar zu erkennen, dass die funktionale Einheit der Bandumlenkrolle 10 an einer der Befestigungspositionen 2 der Bandkörperwange 1 befestigt ist.

Figur 4 ist eine Einzelansicht eines Fußes 4, der mit dem Bandförderer modular an einer Befestigungsposition verbindbar ist. Wie es in der Figur gezeigt ist, ist der Fuß für eine flexible Einsetzbarkeit des Bandförderers zumindest höhenverstellbar.

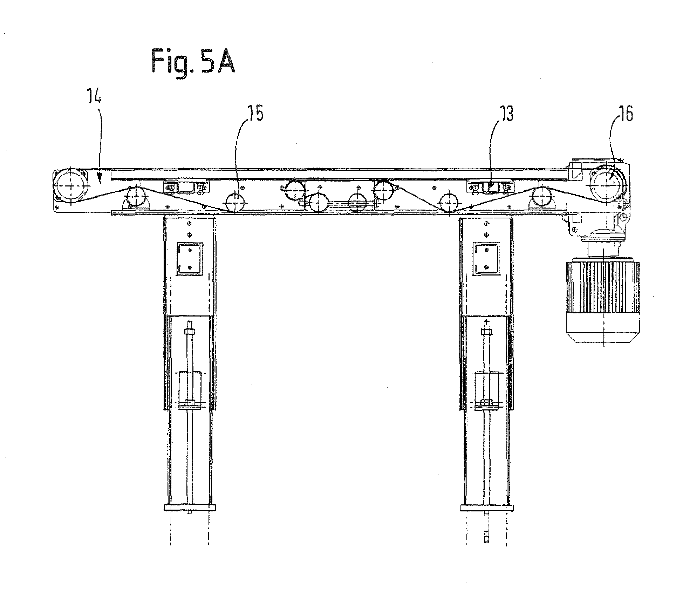

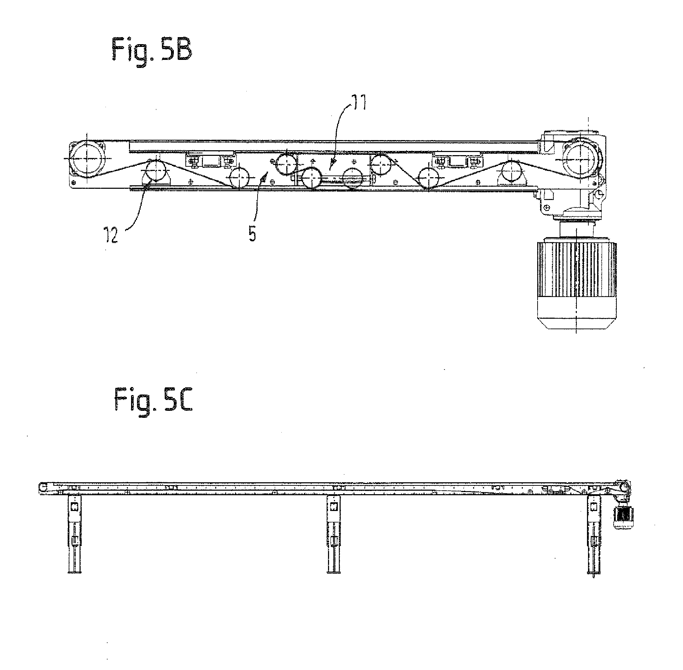

Die Figur 5A bis 5C sind seitliche Schnittansichten des Bandförderers. Darin sind weitere funktionale Einheiten bzw. Module des Bandkörpers 5 gezeigt, die an Befestigungspositionen 2 mit den Bandkörperwangen 1 befestigt sind. Das Referenzzeichen 14 kennzeichnet hierbei ein Umlenkrollenmodul, das Referenzzeichen 15 Unterstützungsrollen und das Referenzzeichen 16 eine Antriebsrolle. Mittels der Umlenk- und Unterstützungsrollen kann eine fixe Förderlänge gewährleistet werden, unabhängig von den vorliegenden Bandspannungswegen.

Die Befestigungspositionen 2, beispielsweise in Form von Bohrungen, Profilnuten, Federn, Vorsprünge, Aussparungen usw. sind so gestaltet, dass alle funktionalen Einheiten bzw. Module zur Komplettierung eines funktionsfähigen Bandförderers befestigt werden können und alle erforderlichen Zusatzmodule, z.B. Sensorik, Lineale, Röllchenleisten, Verbreiterungen, Module zur Bandreinigung, Bandübergänge, Deckelführungen für offene Kartons, Oberdrücke, im Bereich der Befestigungspositionen 2 angebaut werden können. Der Bandförderer ohne Füße kann als Bandkörper 5 mit anderen Transporteinrichtungen, beispielsweise Bandförderern, Rollenbahnen, Zahnriemenförderern, kombiniert bzw. integriert werden.

Der Bandförderer ist vorzugsweise förderrichtungsneutral gestaltet, wodurch alle aufstellungsrelevanten Bandausführungsformen, wie Förderrichtung, Antriebanordnung, Positionierung der Zusatzmodule, realisiert werden können. In den vorliegenden Zeichnungen ist der Bandkörper ohne Verbindungsstellen aufgrund durchgehender Bandkörperwangen für alle in der Praxis benötigten Bandförderlängen vorgesehen.

Die Modulverbindungen können über Schrauben, Schnellverschlüsse, Steckverbindungen, Schiebeverbindungen usw. realisiert werden.

## Patentansprüche

1. Bandförderer mit mindestens einer Bandkörperwange (1), **dadurch gekennzeichnet, dass** die mindestens eine Bandkörperwange ein regelmäßiges Raster an Befestigungspositionen (2) zur Befestigung funktionaler Einheiten des Bandförderers aufweist.

2. Bandförderer nach Anspruch 1, **dadurch gekennzeichnet, dass** der Bandförderer modular aufgebaut ist.

3. Bandförderer nach Anspruch 1 oder 2, **dadurch gekennzeichnet, dass** die Befestigungspositionen in Form von Bohrungen (2) und/oder Profilnuten (3) vorgesehen sind.

4. Bandförderer nach einem der vorhergehenden Ansprüche, **dadurch gekennzeichnet, dass** eine fixe Förderlänge durch Befestigung mindestens zweier Umlenkrollenmodule (14) an beiden Enden der mindestens einen Bandkörperwange vorgesehen ist und mindestens ein zwischen den beiden Umlenkrollenmodulen angeordnetes Bandspannmodul (11) zum Spannen des Förderbandes an der mindestens einen Bandkörperwange vorgesehen ist.

5. Bandförderer nach einem der vorhergehenden Ansprüche, **dadurch gekennzeichnet, dass** der Bandförderer genau zwei profilierte Bandkörperwangen (1) aufweist, die ein regelmäßiges Raster an Befestigungspositionen aufweisen.

6. Bandförderer nach Anspruch 5, **dadurch gekennzeichnet, dass** die beiden Bandkörperwangen (1) parallel zueinander verlaufen und die beiden Raster von Befestigungspositionen spiegelsymmetrisch bezüglich einer Ebene vorgesehen, die parallel zwischen den beiden Bandkörperwangen und senkrecht auf der durch die Bandkörperwangen aufgespannten Ebene stehenden Ebene steht.

7. Bandförderer nach einem der vorhergehenden Ansprüche, **dadurch gekennzeichnet, dass** die funktionalen Einheiten in Form von Traversen (13), Bandspannmodulen (11), Umlenkrollenmodulen (14), Unterstützungsrollen (15) und/oder Antriebseinrichtungen mit Antriebsrolle (16) vorgesehen sind.

8. Bandförderer nach Anspruch 7, **dadurch gekennzeichnet, dass** die Umlenkrollen des Umlenkrollenmoduls Durchmesser aufweisen, der gleich dem einer Antriebsrolle ist.

9. Bandförderer nach einem der vorhergehenden Ansprüche, **dadurch gekennzeichnet, dass** der Bandförderer eine funktionale Einheit in Form einer modularen Bandauflage (9) aufweist, welche an mindestens einer Befestigungsposition befestigt ist.

10. Bandförderer nach einem der vorhergehenden Ansprüche, **dadurch gekennzeichnet, dass** die Befestigungspositionen so gestaltet sind, dass die wesentlichen funktionalen Einheiten zum Aufbau eines funktionsfähigen Bandförderers daran modular befestigt sind.

11. Bandförderer nach einem der vorhergehenden Ansprüche, **dadurch gekennzeichnet, dass** funktionale Einheiten in Form von Zusatzmodulen wie beispielsweise Sensorik, Lineale, Röllchenleisten, Verbreiterungen, Bandreinigung, Bandübergänge, Deckelführungen für offene Kartons und/oder Oberdrucke an den Befestigungspositionen modular befestigt sind.

12. Bandförderer nach einem der vorhergehenden Ansprüche, **dadurch gekennzeichnet, dass** mindestens zwei unterschiedliche Raster an Befestigungspositionen (2', 2'', 2''') an einer Bandkörperwange vorgesehen sind, insbesondere in unterschiedlichen Wänden (1', 1'', 1''') der Bandkörperwange.

13. Bandförderer nach einem der vorhergehenden Ansprüche, **dadurch gekennzeichnet, dass** die Befestigungspositionen derart gestaltet sind, dass der Bandförderer geeignet ist, um mit anderen Transporteinrichtungen, wie beispielsweise Bandförderern, Rollenbahnen und/oder Zahnriemenförderern kombiniert und/oder integriert zu werden.

14. Bandförderer nach einem der vorhergehenden Ansprüche, **dadurch gekennzeichnet, dass** die Bandkörperwangen (1) für den Bandförderer durchgehend sind.

15. Bandförderer nach einem der vorhergehenden Ansprüche, **dadurch gekennzeichnet, dass** ein Antriebsmodul mit einem Hohlwellengetriebemotor (6), einem Getriebemotor mit Vorgelege (7) oder einem Trommelmotor (8) für einen Kopfantrieb vorgesehen ist.
